# EUROPÄISCHE PATENTSCHRIFT

(11) **EP 0 692 857 B1**
(45) Veröffentlichungstag und Bekanntmachung des Hinweises auf die Patenterteilung: **05.11.1997**
(21) Anmeldenummer: 95111020.4
(22) Anmeldetag: 13.07.1995
(51) Int. Cl.: H02J 3/18

(54) **Schaltvorrichtung für eine kondensatorbestückte Blindleistungskompensationseinrichtung**
Switching means for a reactive power-compensation device provided with capacitors
Dispositif de commutation pour un système de compensation de puissance réactive muni de condensateurs

(30) Priorität: 16.07.1994 DE 4425247
(43) Veröffentlichungstag der Anmeldung: 17.01.1996
(73) Patentinhaber: Fraunhofer-Gesellschaft zur Förderung der angewandten Forschung e.V., 80636 München (DE)
(72) Erfinder: Konstanzer, Michael, Dipl.-Ing., D-79114 Freiburg (DE); Freitag, Stefan, Dipl.-Ing., D-79110 Freiburg (DE)

(56) Entgegenhaltungen:
- EP-A- 0 037 087
- DE-A- 3 418 658
- GB-A- 2 128 423
- US-A- 4 348 631
- IEEE TRANSACTIONS ON POWER DELIVERY, Bd. 8, Nr. 4, Oktober 1993, NEW YORK, US, Seiten 1988-1994, XP 000422626, OLIVIER ET AL.:'Minimal transient switching of capacitors'

## Beschreibung

Die Erfindung betrifft eine Schaltvorrichtung für eine kondensatorbestückte Blindleistungskompensationseinrichtung mit einer Schaltung zum Schließen und Öffnen von Phasenleiterschaltern, mit denen bei Anlegen von Steuersignalen die Blindleistungskompensationseinrichtung in Stromnulldurchgängen an Phasenleiter zuschaltbar und abschaltbar ist.

Eine derartige Schaltvorrichtung ist aus einem im Frühjahr 1994 verschickten Prospekt der Firma ELSPEC Engineering ltd. in Tel-Mond, Israel unter dem Namen RTPFC- (Real Time Power Factor Controller-) System bekannt. Mit dieser Schaltvorrichtung ist mit elektronischen Schaltern bei über eine Strommeßeinheit detektierbaren Stromnulldurchgängen von Kompensationskondensatoren eine Blindleistungskompensationseinrichtung schaltbar, wobei zum Vermeiden von hohen Einschaltstromstößen innerhalb weniger Sekunden ein Umschalten zwischen verschiedenen Kompensationsgruppen der Blindleistungskompensationseinrichtung erfolgt. Die Anzahl der benötigten Kompensationsgruppen richtet sich nach der Häufigkeit der Schaltvorgänge pro Zeiteinheit sowie der Entladung der Kompensationskondensatoren der einzelnen Kompensationsgruppen.

Diese Schaltvorrichtung weist den Nachteil auf, daß bei schnell aufeinanderfolgenden Schaltvorgängen mit großen Verbrauchern wie beispielsweise Antriebsmotoren von Baukränen eine Vielzahl von Kompensationsgruppen mit verhältnismäßig kurzen Entladekonstanten benötigt werden, so daß neben einem nachteilig hohen Energieverbrauch durch die Entladung der freigeschalteten Kompensationskondensatoren eine kostenaufwendige Bestückung der Blindleistungskompensationseinrichtung mit schaltbaren Kompensationsgruppen notwendig ist.

Der Erfindung liegt die Aufgabe zugrunde, eine Schaltvorrichtung der eingangs genannten Art zu schaffen, die es bei einem geringen Energieverbrauch ohne eine vorausgehende Entladung oder Aufladung der Kompensationskondensatoren gestattet, schnelle Schaltvorgänge in zeitlich sehr unterschiedlichen Abständen zwischen einer Periode und vielen Perioden einer in den Phasenleitern geführten Wechselspannung auszuführen.

Diese Aufgabe wird erfindungsgemäß dadurch gelöst, daß die Schaltvorrichtung wenigstens zwei beidseitig eines Phasenleiterschalters zwischen gleiche Phasenleiter geschaltete Spannungsmeßvorrichtungen aufweist, wobei einer der Phasenleiter unterbrechungsfrei ist, daß die Ausgangssignale von zwei zwischen die gleichen Phasenleiter geschalteten Spannungsmeßvorrichtungen den Eingängen einer Komparatoreinheit einspeisbar sind, daß der Ausgang der Komparatoreinheit an einen Eingang einer Steuervorrichtung angeschlossen ist und daß bei Anlegen eines externen Steuersignales zum Zuschalten der Blindleistungskompensationseinrichtung an einem weiteren Eingang der Steuervorrichtung bei Gleichheit der Ausgangssignale der an die Komparatoreinheit angeschlossenen Spannungsmeßvorrichtungen nach einem Ausgangssignal der Komparatoreinheit mit der Steuervorrichtung ein Schaltsignal erzeugbar ist, mit dem der zwischen den an die Komparatoreinheit angeschlossenen Spannungsmeßvorrichtungen angeordnete Phasenleiterschalter schließbar ist.

Mit der erfindungsgemäßen Schaltvorrichtung ist die Blindleistungskompensationseinrichtung nunmehr zu beliebigen Schaltzeiten an die Phasenleiter zuschaltbar und abschaltbar, ohne daß es einer ständigen Aufladung oder vollständigen Entladung der Kondensatoren bedarf. Dadurch ist der Energieverlust minimiert und eine Verwendung der erfindungsgemäßen Schaltvorrichtung sowohl bei häufigen Schaltvorgängen als auch bei Schaltzyklen mit verhältnismäßig langen Komplettabschaltzeiten ermöglicht.

Bei der erfindungsgemäßen Schaltvorrichtung ist nunmehr die Blindleistungskompensationseinrichtung bei Spannungsgleichheit beidseitig der Phasenleiterschalter stromstoßlos zuschaltbar.

Der Ladezustand der Kompensationskondensatoren ist durch die zwischen jeweils einen Phasenleiterschalter und die Kompensationskondensatoren geschaltete Spannungsmeßvorrichtung überprüfbar, so daß nach einer Periode der Wechselspannung oder insbesondere zeitlich innerhalb von wenigen Perioden der Wechselspannung des Stromnetzes aufeinanderfolgende Schaltvorgänge mit einer aus einer einzigen Kompensationsgruppe aufgebauten Blindleistungskompensationseinrichtung unabhängig von dem Ladezustand der Kompensationskondensatoren zum Schaltzeitpunkt durchführbar sind. Weiterhin gestattet die Spannungsüberprüfung an den Kompensationskondensatoren und zwischen den Phasenleitern das Vorsehen von verhältnismäßig hochohmigen, lediglich aus Sicherheitsgründen parallel zu den Kompensationskondensatoren geschalteten Entladewiderständen, so daß der Energieverbrauch durch die Zwangsentladung der Kompensationskondensatoren gesenkt ist.

Weitere zweckmäßige Ausgestaltungen und Vorteile der Erfindung sind Gegenstand der Unteransprüche und der nachfolgenden Figurenbeschreibung. Es zeigen:
- Fig. 1: eine mit einer Schaltvorrichtung an Phasenleiter zu- und abschaltbare Sternkompensationsschaltung,
- Fig. 2: eine mit einer Schaltvorrichtung an Phasenleiter zu- und abschaltbare Dreieckskompensationsschaltung,
- Fig. 3: ein Ausführungsbeispiel einer Schaltvorrichtung mit einer Komparatoreinheit zum Vergleichen der Spannungen zwischen zwei Phasenleitern sowie mit einer festen Zeitdifferenz zwischen dem Schließen von zwei Phasenleiterschaltern und
- Fig. 4: eine Schaltvorrichtung mit zwei Komparatoreinheiten zum Vergleichen der Spannungen zwischen jeweils zwei verschiedenen Phasenleiterpaaren sowie mit variablen Zeitdifferenzen zwischen dem Schließen von zwei Phasenleiterschaltern.

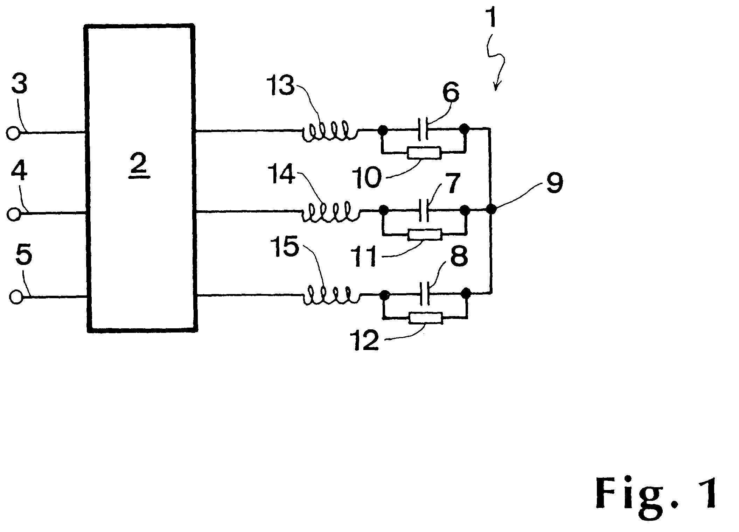

Fig. 1 zeigt in einem Schaltbild beispielhaft eine Sternkompensationsschaltung 1, die mit einer Schaltvorrichtung 2 mit einer festen Zeitdifferenz beim Schließen von Phasenleiterschaltern an einen ersten Phasenleiter 3, einen zweiten Phasenleiter 4 und einen dritten Phasenleiter 5 zuschaltbar und abschaltbar ist. Die drei Phasenleiter 3, 4, 5 sind paarweise mit einer Wechselspannung beaufschlagt, die jeweils um 120 Grad phasenverschoben sind. Die Sternkompensationsschaltung 1 bildet eine Kompensationsgruppe und weist einen ersten Kompensationskondensator 6, einen zweiten Kompensationskondensator 7 und einen dritten Kompensationskondensator 8 auf, die mit jeweils einem Anschluß in einem Sternpunkt 9 zusammengeschaltet sind und im Rahmen der Fertigungstoleranzen gleiche Kapazitäten aufweisen. Selbstverständlich sind bei hohen zu kompensierenden Blindleistungen mehrere Sternkompensationsschaltungen 1 als eine Kompensationsgruppe kaskadierbar.

Parallel zu je einem Kompensationskondensator 6, 7, 8 ist jeweils ein erster Entladewiderstand 10, ein zweiter Entladewiderstand 11 und ein dritter Entladewiderstand 12 geschaltet. Die Entladewiderstände 10, 11, 12 sind aus Sicherheitsgründen vorgesehen und dienen der Zwangsentladung der Kompensationskondensatoren 6, 7, 8. Es sei bereits an dieser Stelle hervorgehoben, daß die Entladewiderstände 10, 11, 12 zum Betrieb der Schaltvorrichtung 2 nicht zwingend erforderlich sind, sondern lediglich zum Erfüllen der Sicherheitsvorschriften vorgesehen sind. Die Kompensationskondensatoren 6, 7, 8 und die parallel geschalteten Entladewiderstände 10, 11, 12 sind jeweils über eine erste Drosselspule 13, eine zweite Drosselspule 14 und eine dritte Drosselspule 15 zum Glätten von Reststromspitzen und zur Filterung von Oberwellen an die Schaltvorrichtung 2 angeschlossen.

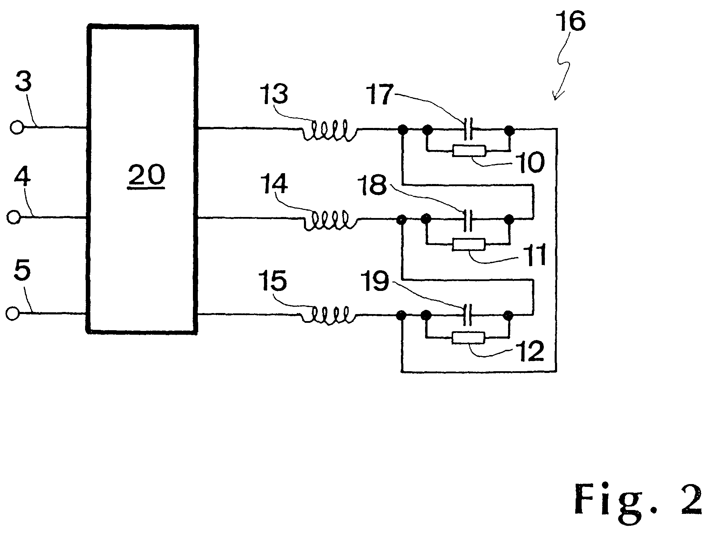

Fig. 2 stellt in einem Schaltbild beispielhaft eine Dreieckskompensationsschaltung 16 dar, bei der jeweils ein Kompensationskondensator 17, 18, 19 zwischen zwei verschiedene Phasenleiter 3, 4, 5 geschaltet ist, wobei die Kompensationskondensatoren 17, 18, 19 mit einer Schaltvorrichtung 20 mit variablen Zeitdifferenzen zwischen dem Schließen von Phasenleiterschaltern zuschaltbar und abschaltbar sind. Die mit jeweils einem Entladewiderstand 10, 11, 12 gebrückten sowie mit Drosselspulen 13, 14, 15 in Reihe geschalteten Kompensationskondensatoren 17, 18, 19 der Dreieckkompensationsschaltung 16 weisen in diesem Ausführungsbeispiel verschieden große Kapazitäten auf. Mehrere Dreieckskompensationsschaltungen 16 sind bei hohen zu kompensierenden Blindleistungen als eine Kompensationsgruppe kaskadierbar.

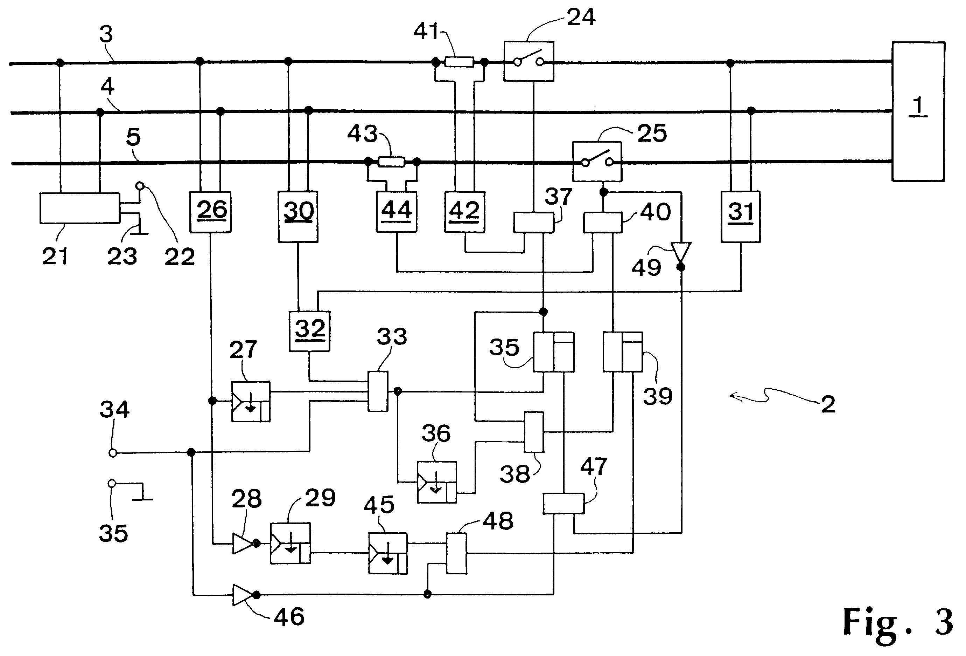

Fig. 3 zeigt in einem Blockschaltbild die Schaltvorrichtung 2 mit einer festen Zeitdifferenz gemäß Fig. 1, die zwischen die Phasenleiter 3, 4, 5 und die Sternkompensationsschaltung 1 gelegt ist. Die Schaltvorrichtung 2 weist zur Spannungsversorgung der einzelnen Baugruppen und Bauelemente ein an den ersten Phasenleiter 3 und den zweiten Phasenleiter 4 angeschlossenes Netzteil 21 auf, an dessen Versorgungsspannungsabgriff 22 gegen einen Massenanschluß 23 eine Versorgungsspannung abgreifbar ist. Aus Gründen der Übersichtlichkeit sind in Fig. 3 Versorgungsspannungsleitungen zu den Baugruppen und Bauelementen nicht dargestellt.

Die Schaltvorrichtung 2 weist einen ersten Phasenleiterschalter 24 und einen zweiten Phasenleiterschalter 25 auf, die in Reihe jeweils in den ersten Phasenleiter 3 und den dritten Phasenleiter 5 gelegt sind. In diesem Ausführungsbeispiel sind als Phasenleiterschalter 24, 25 Halbleiterschalter vorgesehen, die mit einem Schütz brückbar sind. Durch Betätigen der Phasenleiterschalter 24, 25 sind der erste Kompensationskondensator 6 sowie der dritte Kompensationskondensator 8 und damit auch der zweite Kompensationskondensator 7 an die Phasenleiter 3, 4, 5 zuschaltbar und abschaltbar.

Die wechselspannungsseitig zwischen dem ersten Phasenleiter 3 und dem zweiten Phasenleiter 4 anliegende Wechselspannung ist den Eingängen eines Synchronisationskomparators 26 zugeführt. Ist die Spannung des ersten Phasenleiters 3 in Bezug auf den zweiten Phasenleiter 4 positiv, liegt an dem Ausgang des Synchronisationskomparators 26 ein Signal mit niedrigem Pegel an, während bei einer negativen Spannung des ersten Phasenleiters 3 in Bezug auf den zweiten Phasenleiter 4 an dem Ausgang des Synchronisationskomparators 26 ein Signal mit hohem Pegel anliegt. Das Ausgangssignal des Synchronisationskomparators 26 ist dem Eingang eines Einschaltmonoflops 27 und durch einen Synchronisationsinverter 28 invertiert einem Synchronisationsverzögerungsmonoflop 29 eingespeist. Das Einschaltmonoflop 27 ist mit der ansteigenden Flanke und das Synchronisationsverzögerungsmonoflop 29 ist mit der abfallenden Flanke des Ausgangssignales des Synchronisationskomparators 26 schaltbar.

Zwischen dem ersten Phasenleiter 3 und dem zweiten Phasenleiter 4 sind wechselspannungsseitig des ersten Phasenleiterschalters 24 die Eingänge eines ersten Spannungsmessers 30 und kompensationsschaltungsseitig des ersten Phasenleiterschalters 24 die Eingänge eines zweiten Spannungsmessers 31 geschaltet. Die Ausgangssignale der Spannungsmesser 30, 31 sind zu der an den Eingängen anliegenden Wechselspannung proportional. Das Ausgangssignal des ersten Spannungsmessers 30 und des zweiten Spannungsmessers 31 sind an die Eingänge eines ersten Äquivalenzkomparators 32 gelegt. Bei Gleichheit der Ausgangssignale der Spannungsmesser 30, 31 liegt an dem Ausgang des ersten Äquivalenzkomparators 32 ein im Vergleich zu der Periode der Wechselspannung zwischen den Phasenleitern 3, 4 kurzes Ausgangssignal an. Das nicht invertierte Ausgangssignal des Einschaltmonoflops 27 und das Ausgangssignal des ersten Äquivalenzkomparators 32 sind zwei Eingängen eines ersten Setz-UND-Gatters 33 mit insgesamt drei Eingängen eingespeist. Dem dritten Eingang des ersten Setz-UND-Gatters 33 ist der Pegel eines zwischen einem Fernsignaleingang 34 gegen einen Masseanschluß 35 abgreifbaren Steuersignales einspeisbar.

Das Ausgangssignal des ersten Setz-UND-Gatters 33 ist zum einen dem Setzeingang eines ersten Schalt-Flip-Flops 35 und zum anderen dem Eingang eines Schaltverzögerungsmonoflops 36 einspeisbar. Das nichtinvertierte Ausgangssignal des ersten Schalt-Flip-Flops 35 ist einerseits einem ersten Eingang eines ersten Schalt-ODER-Gatter 37 mit zwei Eingängen und zum anderen einem ersten Eingang eines zweiten Setz-UND-Gatters 38 mit zwei Eingängen einspeisbar. Dem zweiten Eingang des zweiten Setz-UND-Gatters 38 ist das invertierte Ausgangssignal des Schaltverzögerungsmonoflops 36 eingespeist, das nach einem Dreiviertel der Periode der Wechselspannung zwischen dem ersten Phasenleiter 3 und dem zweiten Phasenleiter 4 als ein Signal hohen Pegels auftritt. Liegen an den Eingängen des zweiten Setz-UND-Gatters 38 jeweils Signale mit hohem Pegel an, ist der Setzeingang eines zweiten Schalt-Flip-Flops 39 mit einem Signal hohen Pegels ansteuerbar. Das nichtinvertierte Ausgangssignal des zweiten Schalt-Flip-Flops 39 ist einem ersten Eingang eines zweiten Schalt-ODER-Gatters 40 mit zwei Eingängen zugeführt.

In dem ersten Phasenleiter 3 ist ein erster Meßwiderstand 41 vorgesehen, der dem ersten Phasenleiterschalter 24 wechselspannungsseitig vorgeschaltet ist. Die an dem ersten Meßwiderstand 41 abgegriffene Spannung ist bei einem Stromfluß aus der Sternkompensationsschaltung 1 heraus positiv. Bei einem derartigen positiven Spannungsabfall an dem ersten Meßwiderstand 41 ist mit einem ersten Stromprüfer 42 ein Ausgangssignal mit hohem Pegel erzeugbar, das dem zweiten Eingang des ersten Schalt-ODER-Gatters 37 einspeisbar ist. Mit dem Ausgangssignal des ersten Schalt-ODER-Gatters 37 ist der erste Phasenleiterschalter 24 betätigbar, wobei bei einem hohen Pegel der erste Phasenleiterschalter 24 schließbar und bei einem niedrigen Pegel öffenbar ist.

In entsprechender Weise ist auf der Wechselspannungsseite des zweiten Phasenleiterschalters 25 in den dritten Phasenleiter 5 ein zweiter Meßwiderstand 43 geschaltet, wobei der Spannungsabfall an dem zweiten Meßwiderstand 43 mit einem zweiten Stromprüfer 44 bestimmbar ist. Der zweite Stromprüfer 44 liefert bei einem aus der Sternkompensationsschaltung 1 herausfließenden Strom ein Ausgangssignal mit hohem Pegel, das dem zweiten Eingang des zweiten Schalt-ODER-Gatters 40 einspeisbar ist.

Das invertierte Ausgangssignal des Synchronisationsverzögerungsmonoflops 29 mit einer Haltezeit von einem Viertel der Periode der zwischen dem ersten Phasenleiter 3 und dem zweiten Phasenleiter 4 anliegenden Wechselspannung ist einem Schaltmonoflop 45 zugeführt, wobei mit dem Schaltmonoflop 45 ein im Vergleich zu der Periode der zwischen dem ersten Phasenleiter 3 und dem zweiten Phasenleiter 4 anliegenden Wechselspannung kurzes Ausgangssignal erzeugbar ist. Das mit einem Fernsignalinverter 46 invertierte, an dem Fernsignaleingang 34 anliegende Steuersignal ist einem ersten Eingang eines ersten Rücksetz-UND-Gatter 47 mit zwei Eingängen und einem ersten Eingang eines zweiten Rücksetz-UND-Gatters 48 mit zwei Eingängen eingespeist.

Das nichtinvertierte Ausgangssignal des Schaltmonoflops 45 ist dem zweiten Eingang des zweiten Rücksetz-UND-Gatters 48 zuführbar. Das Ausgangssignal des ersten Rücksetz-UND-Gatters 47 ist dem Rücksetzeingang des ersten Schalt-Flip-Flops 35 und das Ausgangssignal des zweiten Rücksetz-UND-Gatters 48 dem Rücksetzeingang des zweiten Schalt-Flip-Flops 39 eingespeist. Der zweite Eingang des ersten Rücksetz-UND-Gatters 47 ist von dem mit einem Schaltsignalinverter 49 invertierten Ausgangssignal des zweiten Schalt-ODER-Gatters 40 beaufschlagt.

Nachfolgend ist die Funktionsweise der Schaltvorrichtung 2 zum Zuschalten und Abschalten der Sternkompensationsschaltung 1 beschrieben. Nach dem Übergang des Pegels des an dem Fernsignaleingang 34 anliegenden Steuersignales von einem niedrigen Wert auf einen hohen Wert zum Schließen des in dem ersten Phasenleiter 3 vorgesehenen Phasenleiterschalters 24 ist innerhalb eines Viertels der Periode der Wechselspannung nach dem von dem Synchronisationskomparator 26 gelieferten Triggersignal durch das Ausgangssignal mit einem hohen Pegel des Einschaltmonoflops 27 bei Spannungsgleichheit zwischen dem ersten Phasenleiter 3 und dem zweiten Phasenleiter 4 beidseitig des geöffneten ersten Phasenleiterschalters 24 über das erste Setz-UND-Gatter 33 ein den Setzeingang des ersten Schalt-Flip-Flops 35 sowie den Eingang des Schaltverzögerungsmonoflops 36 beaufschlagendes Ausgangssignal mit hohem Pegel erzeugbar. Das erste Schalt-Flip-Flop 35 liefert ein über das erste Schalt-ODER-Gatter 37 laufendes Schaltsignal mit hohem Pegel zum Schließen des ersten Phasenleiterschalters 24.

Mit einer festen Verzögerungszeit von einem Dreiviertel der Periode der zwischen den Phasenleitern 3, 4 anliegenden Wechselspannung springt das invertierte Ausgangssignal des Schaltverzögerungsmonoflops 36 auf einen hohen Pegel zurück und schaltet das zweite Setz-UND-Gatter 38, dem das nichtinvertierte Ausgangssignal des ersten Schalt-Flip-Flops 35 zugeführt ist, auf den Setzeingang des zweiten Schalt-Flip-Flops 39 durch. Mit dem Ausgangssignal des zweiten Schalt-Flip-Flops 39 ist der zweite Phasenleiterschalter 25 über das zweite Schalt-ODER-Gatter 40 schließbar. Die Sternkompensationsschaltung 1 ist nunmehr an die Phasenleiter 3, 4, 5 zugeschaltet.

Zum Abschalten der Sternkompensationsschaltung 1 von den Phasenleitern 3, 5 liegt an dem Fernsignaleingang 34 ein Steuersignal mit niedrigem Pegel an, welches das Ausgangssignal des ersten Setz-UND-Gatters 33 auf einen niedrigen Pegel setzt. Das durch den Fernsignalinverter 46 in ein Signal mit hohem Pegel umgewandelte Steuersignal ist dem ersten Rücksetz-UND-Gatter 47 und dem zweiten Rücksetz-UND-Gatter 48 eingespeist, wobei durch das Ausgangssignal des zweiten Rücksetz-UND-Gatters 48 nach der durch das Synchronisationsmonoflop 29 festgelegten Verzögerungszeit nach der abfallenden Flanke des Ausgangssignales des Synchronisationskomparators 26 der Rücksetzeingang des zweiten Schalt-Flip-Flops 39 mit einem Signal zum Rücksetzen beaufschlagt ist und somit an dem Ausgang des zweiten Schalt-Flip-Flops 39 ein Signal mit niedrigem Pegel anliegt. Bei einem auf Null zurückgehenden Strom aus der Sternkompensationsschaltung 1 heraus ist der zweite Phasenleiterschalter 25 mit dem Ausgangssignal mit niedrigem Pegel aus dem zweiten Schalt-ODER-Gatter 40 im Stromnulldurchgang öffenbar.

Nach Öffnen des zweiten Phasenleiterschalters 25 ist durch das Ausgangssignal mit hohem Pegel des Schaltsignalinverters 49 auf das erste Rücksetz-UND-Gatter 47 der Rücksetzeingang des ersten Schalt-Flip-Flops 35 mit einem Signal hohen Pegels beaufschlagbar, so daß an dem Ausgang des ersten Schalt-Flip-Flops 35 ein Signal mit niedrigem Pegel anliegt. Bei einem auf Null zurückgehenden Strom aus der Sternkompensationsschaltung 1 heraus ist der Phasenleiterschalter 24 mit dem Ausgangssignal mit niedrigem Pegel aus dem ersten Schalt-ODER-Gatter 37 im Stromnulldurchgang öffenbar.

Mit der Schaltvorrichtung 2 ist ein schnell aufeinanderfolgendes Zuschalten und Abschalten der Sternkompensationsschaltung 1 auch mit noch beispielsweise halb geladenen Kompensationskondensatoren 6, 7, 8 durchführbar, da bei Spannungsgleichheit zwischen jeweils zwei Phasenleitern 3, 4, 5 und dem jeweiligen Kompensationskondensator 6, 7, 8 geschaltet ist. Beim Abschalten öffnet zuerst der zweite Phasenleiterschalter 25 und dann der erste Phasenleiterschalter 24, während beim Zuschalten zuerst der erste Phasenleiterschalter 24 und dann der zweite Phasenleiterschalter 25 schließt.

Weiterhin ist bei der in Fig. 3 dargestellten Schaltvorrichtung 2 bei gleich großen Kompensationskondensatoren 6, 7, 8 ein zeitlich gleichbleibender Zuschaltvorgang beginnend in der ansteigenden negativen Flanke der Wechselspannung zwischen den Phasenleitern 3, 4 mit lediglich einer Spannungsmessung zwischen zwei Phasenleitern 3, 4 durchführbar. Das Schließen des zweiten Phasenleiterschalters 25 erfolgt zeitlich gleichbleibend mit einem Dreiviertel der Periode der zwischen den Phasenleitern 3, 4 anliegenden Wechselspannung nach dem Schließen des ersten Phasenleiterschalters 24 stromstoßlos bei Spannungsgleichheit zwischen der Wechselspannung an den Phasenleitern 4, 5 und den zugehörigen Kompensationskondensatoren 7, 8.

Das Schaltverhalten der Phasenleiter 24, 25 in Verbindung mit der Ansteuerung durch die Schalt-ODER-Gatter 37, 40 ist zweckmäßigerweise auch durch das Vorsehen von Zweirichtungs-Thyristoren (TRIAC'S) durchführbar. Die Ausgangssignale der jeweiligen Schalt-Flip-Flops 35, 39 sind den Steueranschlüssen (GATES) der TRIAC'S zugeführt.

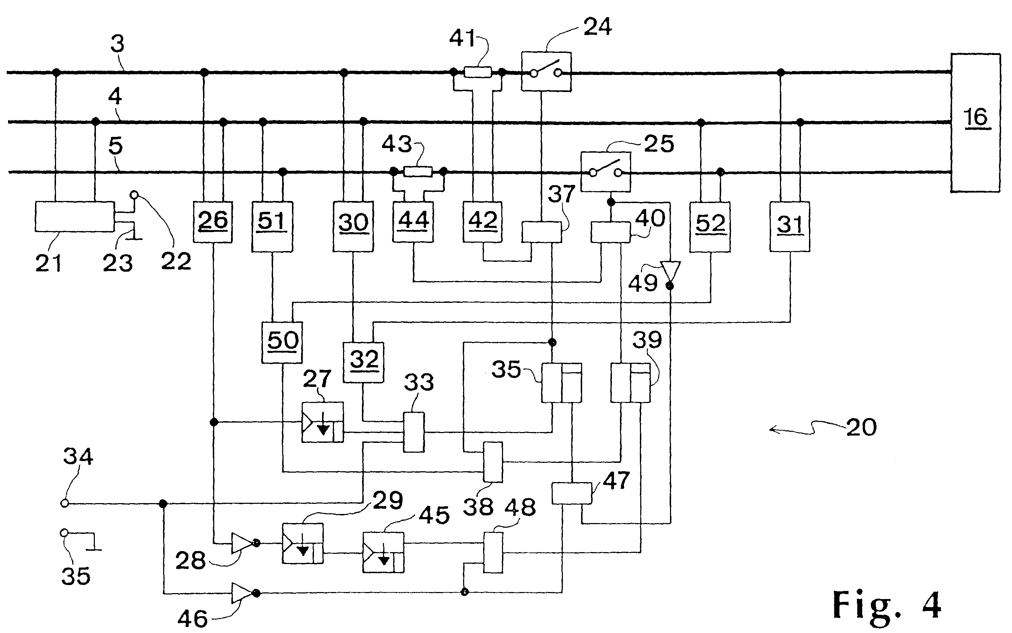

Fig. 4 zeigt in einem Schaltbild die Schaltvorrichtung 20 mit variablen Zeitdifferenzen zwischen dem Schließen der Phasenleiterschalter zum Zuschalten und Abschalten der mit verschieden großen Kompensationskondensatoren 17, 18, 19 bestückten Dreieckskompensationsschaltung 16. Sich in Fig. 3 und Fig. 4 entsprechende Bauelemente sind mit gleichen Bezugszeichen versehen und nachfolgend nicht nochmals erläutert. Die wesentlichen Unterschiede der Schaltvorrichtung 20 mit variablen Zeitdifferenzen zu der Schaltvorrichtung 1 mit der festen Zeitdifferenz bestehen darin, daß der zweite Eingang des zweiten Setz-UND-Gatters 38 bei der Schaltvorrichtung 20 mit variablen Zeitdifferenzen von dem Ausgangssignal eines zweiten Äquivalenzkomparators 50 beaufschlagt ist und daß ein Eingang des ersten Setz-UND-Gatters 33 mit dem invertierten Ausgangssignal des Einschaltmonoflops 27 beaufschlagt ist, so daß der Zuschaltvorgang zwischen dem negativen Scheitel und dem Nulldurchgang der Wechselspannung zwischen den Phasenleitern 3, 4 erfolgt.

Die Eingänge des zweiten Äquivalenzkomparators 50 sind mit den Ausgangssignalen eines dritten Spannungsmessers 51 und eines vierten Spannungsmesser 52 beaufschlagbar. Die Eingänge des dritten Spannungsmessers 51 und des vierten Spannungsmessers 52 sind jeweils mit dem zweiten Phasenleiter 4 und dem dritten Phasenleiter 5 beidseitig des Phasenleiterschalters 25 verbunden. Der zweite Äquivalenzkomparator 50 liefert ein im Verhältnis zu der Periode der an dem zweiten Phasenleiter 4 in Bezug auf den dritten Phasenleiter 5 anliegenden Wechselspannung kurzes Ausgangssignal auf einen Eingang des zweiten Setz-UND-Gatters 38. In Abhängigkeit des Ladezustandes der Kompensationskondensatoren 17, 18, 19 liegt die Verzögerungszeit zwischen dem Schließen des ersten Phasenleiterschalters 24 und dem Schließen des zweiten 25 zwischen einem Viertel und einem Dreiviertel der Periode der Wechselspannung.

Mit den Schaltvorrichtungen 2, 20 sind die Kompensationsschaltungen 1, 16 unabhängig von der Entladezeit der Kompensationskondensatoren 6, 7, 8; 17, 18, 19 und dabei insbesondere kurz hintereinander zuschaltbar und abschaltbar, so daß durch das auch bei verschiedenen Abschaltzeitpunkten durch das zeitlich determinierte Entladeverhalten der Kompensationskondensatoren 6, 7, 8 mit einer festen Verzögerungszeit beziehungsweise mit einer zweiten Spannungsmessung zwischen den Phasenleitern 4, 5 kurz hintereinander ablaufende Schaltvorgänge innerhalb weniger Perioden der Wechselspannung durchführbar sind. Die Schaltfunktionen der Monoflops 27, 29, 36, 45, der Flip-Flops 35, 39, der Komparatoren 26, 30, 31, 51, 52 sowie der logischen Gatter 33, 37, 38, 40, 47, 48 in Verbindung mit den Invertern 28, 46, 49 sind selbstverständlich auch durch einen als Datenverarbeitungsprogramm abgelegten Algorithmus ausführbar.

## Patentansprüche

1. Schaltvorrichtung für eine kondensatorbestückte Blindleistungskompensationseinrichtung (1) zum Schließen und Öffnen von wenigstens einem Phasenleiterschalter, mit dem bei Anlegen von Steuersignalen die Blindleistungskompensationseinrichtung (1, 16) in Stromnulldurchgängen an wenigstens zwei Phasenleiter (3, 4, 5) zuschaltbar und abschaltbar ist, **dadurch gekennzeichnet**, daß die Schaltvorrichtung (2, 20) wenigstens zwei beidseitig eines Phasenleiterschalters (24, 25) zwischen gleiche Phasenleiter (3, 4; 4, 5) geschaltete Spannungsmeßvorrichtungen (30, 31; 51, 52) aufweist, wobei einer der Phasenleiter (4) unterbrechungsfrei ist, daß die Ausgangssignale von zwei zwischen die gleichen Phasenleiter (3, 4; 4, 5) geschalteten Spannungsmeßvorrichtungen (30, 31; 51, 52) den Eingängen einer Komparatoreinheit (32; 50) einspeisbar sind, daß der Ausgang der Komparatoreinheit (32; 50) an einen Eingang einer Steuervorrichtung (33) angeschlossen ist und daß bei Anlegen eines externen Steuersignales (34) zum Zuschalten der Blindleistungskompensationseinrichtung (1, 16) an einem weiteren Eingang der Steuervorrichtung (33) bei Gleichheit der Ausgangssignale der an die Komparatoreinheit (32; 50) angeschlossenen Spannungsmeßvorrichtungen (30, 31; 51, 52) nach einem Ausgangssignal der Komparatoreinheit (32; 50) mit der Steuervorrichtung (33) ein Schaltsignal erzeugbar ist, mit dem der zwischen den an die Komparatoreinheit (32; 50) angeschlossenen Spannungsmeßvorrichtungen (30, 31; 51, 52) angeordnete Phasenleiterschalter (24; 25) schließbar ist.

2. Schaltvorrichtung nach Anspruch 1, dadurch gekennzeichnet, daß bei drei Phasenleitern (3, 4, 5) zwei in je einem Phasenleiter (3, 5) angeordnete Phasenleiterschalter (24, 25) vorgesehen sind, wobei jeweils ein Eingang jeder Spannungsmeßvorrichtung (30, 31; 51, 52) an den unterbrechungsfreien Phasenleiter (4) angeschlossen ist.

3. Schaltvorrichtung nach Anspruch 2, dadurch gekennzeichnet, daß das Ausgangssignal der Komparatoreinheit (32) mit dem Ausgangssignal einer Synchronisationseinrichtung (26) sowie dem externen Steuersignal zum Zuschalten und Abschalten der Blindleistungskompensationseinrichtung (1, 16) den Eingängen einer als UND-Gatter (33) ausgebildeten Steuervorrichtung einspeisbar ist.

4. Schaltvorrichtung nach Anspruch 3, dadurch gekennzeichnet, daß mit dem Ausgangssignal des UND-Gatters (33) der erste Phasenleiterschalter (24) und über eine Verzögerungsschaltung (36) nach einer festen Verzögerungszeit von einem Dreiviertel der Periode einer den Phasenleitern (3, 4, 5) eingespeisten, jeweils phasenverschobenen Wechselspannung gleicher Frequenz der zweite Phasenleiterschalter (25) in dem nicht an die Komparatoreinheit (32) angeschlossenen Phasenleiter (5) schließbar ist.

5. Schaltvorrichtung nach Anspruch 3, dadurch gekennzeichnet, daß eine zweite Komparatoreinheit (50) vorgesehen ist, deren Eingänge jeweils mit den Ausgängen von zwei Spannungsmeßvorrichtungen (51, 52) verbunden sind.

6. Schaltvorrichtung nach Anspruch 5, dadurch gekennzeichnet, daß mit der zweiten Komparatoreinheit (50) nach Betätigen des von der ersten Komparatoreinheit (32) angesteuerten ersten Phasenleiterschalters (24) bei Spannungsgleichheit beidseitig des zweiten Phasenleiterschalters (25) ein Schaltsignal zum Schließen des zweiten Phasenleiterschalters (25) erzeugbar ist.

7. Schaltvorrichtung nach Anspruch 4 oder 6, dadurch gekennzeichnet, daß zum Abschalten der Blindleistungskompensationseinrichtung (1, 16) nach einem um ein Viertel der Periode der Wechselspannung verzögerten Ausgangssignal der Synchronisationseinrichtung (26) im Scheitelpunkt der Spannung in dem Phasenleiter (5) von einer zweiten Zeitschaltvorrichtung (29) gesteuert der zweite Phasenleiterschalter (25) vor dem ersten Phasenleiterschalter (24) öffenbar ist.

## Claims

1. Switchgear for a reactive-power compensating means (1) equipped with capacitors for opening and closing at least one phase conductor switch which upon application of control signals may be controlled to connect and disconnect said reactive-power compensating means (1, 16) in current zero-axis crossing to at least two phase conductors (3, 4, 5), **characterised in** that the switchgear (2, 20) comprises at least two voltmeter means (30, 31) connected on either side of a phase conductor switch (24, 25) between equal phase conductors (3, 4; 4, 5) whereof one (4) is break-free, that the output signals of two voltmeter means (30, 31; 51, 52) connected between said equal phase conductors (3, 4; 4, 5) may be supplied to the inputs of a comparator unit (32; 50), that the output of said comparator unit (32; 50) is connected to an input of a control device (33), and that upon application of an external control signal (34) for connection of said reactive-power compensating means (1, 16) (1, 16) at another input of said control device (33), when the output signals of said voltmeter means (30, 31; 51, 52) are equal, said control device (33) may be controlled to generate a switching signal upon an output signal from said comparator unit (32; 50), which switching signal is adapted to close the phase conductor switch (24; 25) connected between said voltmeter means (30, 31; 51, 52) connected to said comparator unit (32; 50).

2. Switchgear according to Claim 1, **characterised in** that in the case of three phase conductors (3, 4) two phase conductor switches (24, 25) are provided which are disposed in one phase conductor (3, 5) each, with one input of each voltmeter means (30, 31; 51, 52) being connected to the respective break-free phase conductor (4).

3. Switchgear according to Claim 2, **characterised in** that the output signal of said comparator unit (32) may be supplied to the inputs of a control device designed as AND gate (33), together with the output signal of a synchronizing means (26) as well as said external control signal for connecting and disconnecting said reactive-power compensating means (1, 16).

4. Switchgear according to Claim 3, **characterised in** that the output signal of said AND gate (33) may be controlled to close said first phase conductor switch (24) and, via a delay circuit (36) after an invariable delay time corresponding to three quarters of the period of a respective out-of-phase alternating voltage of equal frequency, which is supplied to said phase conductors (3, 4, 5), the second phase conductor switch (25) in the phase conductor (5) not connected to said comparator unit (32).

5. Switchgear according to Claim 3, **characterised in** that a second comparator unit (50) is provided whose inputs are each connected to the outputs of two voltmeter devices (51, 52).

6. Switchgear according to Claim 5, **characterised in** that upon operation of the first phase conductor switch (24) controlled by said first comparator unit (32), if the voltage on either side of said second phase conductor switch (25) is equal, said second comparator unit (50) may be controlled to generate a switching signal for closing said second phase conductor switch (25).

7. Switchgear according to Claim 4 or 6, **characterised in** that for disconnection of said reactive-power compensating means (1, 16) after an output signal of said synchronizing means (26), which is delayed by one quarter of the period of the alternating voltage, said second phase conductor switch (25) may be opened, under control of a second timer means (29) in the vertex of the voltage in said phase conductor (5), before said first phase conductor switch (24).

## Revendications

1. Appareil de coupure pour un moyen compensateur de la puissance réactive (1) muni de condensateurs à ouvrir et fermer au moins un interrupteur de fil de phase qui, après l'application des signaux de commande peut être commandé à raccorder ou déconnecter ledit moyen compensateur de la puissance réactive (1, 16), au passage du courant par zéro, à au moins deux fils de phase (3, 4, 5), **caractérisé en ce** que l'appareil de coupure (2, 20) comprend au moins deux moyens voltmètre (30, 31) branchés aux deux côtés d'un interrupteur de fil de phase (24, 25) entre des fils de phase égaux (3, 4; 4, 5), dont un (4) est sans discontinuité, en ce que les signaux de sortie de deux moyens voltmètre (30, 31; 51, 52) branchés entre lesdits fils de phase (3, 4; 4, 5) égaux peuvent être alimentés aux entrées d'une unité comparateur (32; 50), en ce que la sortie de ladite unité comparateur (32; 50) est raccordée à une entrée d'un organe de commande (33), et en ce qu'après l'application d'un signal de commande extérieur (34) pour brancher ledit moyen compensateur de la puissance réactive (1, 16) (1, 16) à une autre entrée dudit organe de commande (33), quand les signaux de sortie desdits moyens voltmètre (30, 31; 51, 52) sont égaux, ledit organe de commande (33) peut être commandé à engendrer un signal de commutation après un signal de sortie de ladite unité comparateur (32; 50), ce signal de commutation étant approprié à fermer l'interrupteur de fil de phase (24; 25) branché entre lesdits moyens voltmètre (30, 31; 51, 52) raccordés à ladite unité comparateur (32; 50).

2. Appareil de coupure selon la revendication 1, **caractérisé en ce** qu'au cas de trois fils de phase (3, 4) deux interrupteurs de fil de phase (24, 25) sont disposés dont chacun est branché dans un fil de phase (3, 5) respectif, à une entrée de chacun desdits moyens voltmètre (30, 31; 51, 52) étant raccordée au fil de phase (4) sans discontinuité respectif.

3. Appareil de coupure selon la revendication 2, **caractérisé en ce** que le signal de sortie de ladite unité comparateur (32) peut être alimenté aux entrées d'un organe de commande conçu sous forme d'une porte de circuit logique ET (33), ensemble avec le signal de sortie d'un moyen synchroniseur (26) et de même avec ledit signal de commande extérieur afin de mettre ledit moyen compensateur de la puissance réactive (1, 16) en et hors circuit.

4. Appareil de coupure selon la revendication 3, **caractérisé en ce** que le signal de sortie de la porte de circuit logique ET (33) peut être commandé à fermer ledit premier interrupteur de fil de phase (24) et, via un circuit de délai (36) après un retard non variable en correspondance avec trois quarts de la période d'une tension alternative déphasée respective de la même fréquence, qui est alimentée auxdits fils de phase (3, 4, 5), le deuxième interrupteur de fil de phase (25) dans le fil de phase (5) non branché à ladite unité comparateur (32).

5. Appareil de coupure selon la revendication 3, **caractérisé en ce** qu'une deuxième unité comparateur (50) est disposée dont chacune de ses entrées est branchée aux sorties de deux dispositifs voltmètres (51, 52).

6. Appareil de coupure selon la revendication 5, **caractérisé en ce** qu'après l'actionnement du premier interrupteur de fil de phase (24), sous commande par ladite première unité comparateur (32), si la tension aux deux côtés dudit deuxième interrupteur de fil de phase (25) est égale, on peut commander ladite deuxième unité comparateur (50) à engendrer un signal de commutation afin de fermer ledit deuxième interrupteur de fil de phase (25).

7. Appareil de coupure selon la revendication 4 ou 6, **caractérisé en ce** qu'afin de mettre ledit moyen compensateur de la puissance réactive (1, 16) hors circuit après un signal de sortie dudit moyen synchroniseur (26), qui est temporisé par un quart de la période de la tension alternative, on peut ouvrir, sous commande par un deuxième moyen de temporisation (29) à un point de sommet de la tension dans ledit fil de phase (25), avant ledit premier interrupteur de fil de phase (24).
